# EUROPEAN PATENT APPLICATION

(11) **EP 1 708 105 A1**
(43) Date of publication of application: **04.10.2006**
(21) Application number: 06111598.6
(22) Date of filing: 23.03.2006
(51) Int. Cl.: G06F 17/30

(54) **Data mining techniques for improving search relevance**

(30) Priority: 31.03.2005 US 96153
(71) Applicant: Microsoft Corporation, Redmond WA 98052 (US)
(72) Inventor: Zheng, Zijian, Redmond, WA 98052 (US)
(74) Representative: Grünecker, Kinkeldey, Stockmair & Schwanhäusser Anwaltssozietät

(57) **Abstract**

The subject invention relates to systems and methods that automatically learn data relevance from past search activities and apply such learning to facilitate future search activities. In one aspect, an automated information retrieval system is provided. The system includes a learning component that analyzes stored information retrieval data to determine relevance patterns from past user information search activities. A search component employs the learning component to determine a subset of current search results based at least in part on the relevance patterns, wherein numerous variables can be processed in accordance with the learning component to efficiently generate focused, prioritized, and relevant search results.

## Description

### TECHNICAL FIELD

The subject invention relates generally to computer systems, and more particularly, relates to systems and methods that employ relevance classification techniques on a data log of previous search results to enhance the quality of current search engine results.

### BACKGROUND OF THE INVENTION

Given the popularity of the World Wide Web and the Internet, users can acquire information relating to almost any topic from a large quantity of information sources. In order to find information, users generally apply various search engines to the task of information retrieval. Search engines allow users to find Web pages containing information or other material on the Internet that contain specific words or phrases. For instance, if they want to find information about George Washington, the first president of the United States, they can type in "George Washington first president", click on a search button, and the search engine will return a list of Web pages that include information about this famous president. If a more generalized search were conducted however, such as merely typing in the term "Washington," many more results would be returned such as relating to geographic regions or institutions associated with the same name.

There are many search engines on the Web. For instance, AllTheWeb, AskJeeves, Google, HotBot, Lycos, MSN Search, Teoma, Yahoo are just a few of many examples. Most of these engines provide at least two modes of searching for information such as via their own catalog of sites that are organized by topic for users to browse through, or by performing a keyword search that is entered via a user interface portal at the browser. In general, a keyword search will find, to the best of a computer's ability, all the Web sites that have any information in them related to any key words and phrases that are specified. A search engine site will have a box for users to enter keywords into and a button to press to start the search. Many search engines have tips about how to use keywords to search effectively. The tips are usually provided to help users more narrowly define search terms in order that extraneous or unrelated information is not returned to clutter the information retrieval process. Thus, manual narrowing of terms saves users a lot of time by helping to mitigate receiving several thousand sites to sort through when looking for specific information.

One problem with current searching techniques is the requirement of manual focusing or narrowing of search terms in order to generate desired results in a short amount of time. Another problem is that search engines operate the same for all users regardless of different user needs and circumstances. Thus, if two users enter the same search query they get the same results, regardless of their interests, previous search history, computing context, or environmental context (e.g., location, machine being used, time of day, day of week). Unfortunately, modem searching processes are designed for receiving explicit commands with respect to searches rather than considering these other personalized factors that could offer insight into the user's actual or desired information retrieval goals.

From Web search engines to desktop application utilities (e.g., help systems), users consistently utilize information and retrieval systems to discover unknown information about topics of interest. In some cases, these topics are prearranged into topic and subtopic areas. For example, "Yahoo" provides a hierarchically arranged predetermined list of possible topics *(e.g.,* business, government, science, etc.) wherein the user will select a topic and then further select a subtopic within the list. Another example of predetermined lists of topics is common on desktop personal computer help utilities wherein a list of help topics and related subtopics are provided to the user. While these predetermined hierarchies may be useful in some contexts, users often need to search for/inquire about information that is hard to find by following the topic structures or is outside of and/or not included within these predetermined lists. Thus, search engines or other search systems are often employed to enable users to direct user-crafted queries in order to find desired information. Unfortunately, this often leads to frustration when many unrelated files are retrieved since users may be unsure of how to author or craft a particular query. This often causes users to continually modify queries in order to refine retrieved search results to a reasonable number of files. For those who are not familiar with computer techniques, this can be very difficult. As a result, they may not be able to find what they want.

As an example of this dilemma, it is not uncommon to type in a word or phrase in a search system input query field and retrieve several thousand files - or millions of web sites in the case of the Internet, as potential candidates. In order to make sense of the large volume of retrieved candidates, the user will often experiment with other word combinations to further narrow the list since many of the retrieved results may share common elements, terms or phrases yet have little or no contextual similarity in subject matter. This approach is inaccurate and time consuming for both the user and the system performing the search. Inaccuracy is illustrated in the retrieval of thousands if not millions of unrelated files/sites the user is not interested in. Time and system processing speed are also sacrificed when searching massive databases for possible yet unrelated files.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The subject invention relates to systems and methods that employ data mining and learning techniques to facilitate efficient searching, retrieval, and analysis of information. In one aspect, a learning component such as Bayesian classifier, for example, is trained from a log that stores information from a plurality of past user search activities. For instance, the learning component can determine whether or not certain returned results in the log are more relevant or not to users by analyzing implicit or explicit data within the logs, wherein such data indicates the relevance or quality of search results or subset of results. In one specific example, it may be determined that given a set of returned search results that users have dwelled (e.g., spent more time) on certain types of results - indicating higher relevance, than other types of results given the nature of the initial search query. Over time, the learning component can be trained from the past search activities and employed as a run-time classifier with a search engine to filter or determine the most relevant results from a user's submitted query to the engine. In this manner, by automatically classifying results that are more likely relevant to a user, information search processes can be enhanced by mitigating the amount of time for users to locate desired information.

Various analytical techniques can be employed to train learning components and facilitate future information retrieval processes. This can include analyzing the number of times users have actually selected a result to determine its relevance in view of a given query. Rather than require the user to provide explicit feedback as to relevance, implicit factors such as how many times a particular result was opened, how much time was spent with a file linked to a result or how far the user drilled-down into a particular file. In this manner, relevance can be automatically determined without further burdening users to explicitly inform the system as to what results may be relevant and those which are not. Sequential analysis techniques can be applied to previously failed queries to automatically enhance future queries. Other relevance factors for refining future queries and resolving ambiguities include analyzing extrinsic or contextual data such as operating system version, the type of application used, hardware settings and so forth. This can include a consideration of variables such as seasonal or time sensitive information into a query to facilitate that more relevant results are returned.

To the accomplishment of the foregoing and related ends, certain illustrative aspects of the invention are described herein in connection with the following description and the annexed drawings. These aspects are indicative of various ways in which the invention may be practiced, all of which are intended to be covered by the subject invention. Other advantages and novel features of the invention may become apparent from the following detailed description of the invention when considered in conjunction with the drawings.

### BRIEF DESCRIPTION OF THE DRAWINGS

Fig. 1 is a schematic block diagram illustrating an automated information retrieval system in accordance with an aspect of the subject invention.

Fig. 2 is a flow diagram illustrating an information retrieval process in accordance with an aspect of the subject invention.

Fig. 3 illustrates relevance classifier considerations in accordance with an aspect of the subject invention.

Fig. 4 illustrates relevance training set considerations in accordance with an aspect of the subject invention.

Fig. 5 illustrates runtime classifier creation processing in accordance with an aspect of the subject invention.

Fig. 6 illustrates data blending considerations in accordance with an aspect of the subject invention.

Fig. 7 illustrates classifier testing and diagnostic aspects in accordance with an aspect of the subject invention.

Fig. 8 illustrates an example modeling system in accordance with an aspect of the subject invention.

Fig. 9 is a schematic block diagram illustrating a suitable operating environment in accordance with an aspect of the subject invention.

Fig. 10 is a schematic block diagram of a sample-computing environment with which the subject invention can interact.

### DETAILED DESCRIPTION OF THE INVENTION

The subject invention relates to systems and methods that automatically learn data relevance from past search activities and apply such learning to facilitate future search activities. In one aspect, an automated information retrieval system is provided. The system includes a learning component that analyzes stored information retrieval data to determine relevance patterns from past user information search activities. A search component (*e.g.*, search engine) employs the learning component to determine a subset of current search results based at least in part on the relevance patterns. Numerous variables can be processed in accordance with the learning component including search failure data, relevance data, implicit data, system data, application data, hardware data, contextual data such as time-specific information, and so forth in order to efficiently generate focused, prioritized, and relevant search results.

As used in this application, the terms "component," "system," "engine," "query," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate *via* local and/or remote processes such as in accordance with a signal having one or more data packets (*e.g.*, data from one component interacting with another component in a local system, distributed system, and/or across a network such as the Internet with other systems *via* the signal).

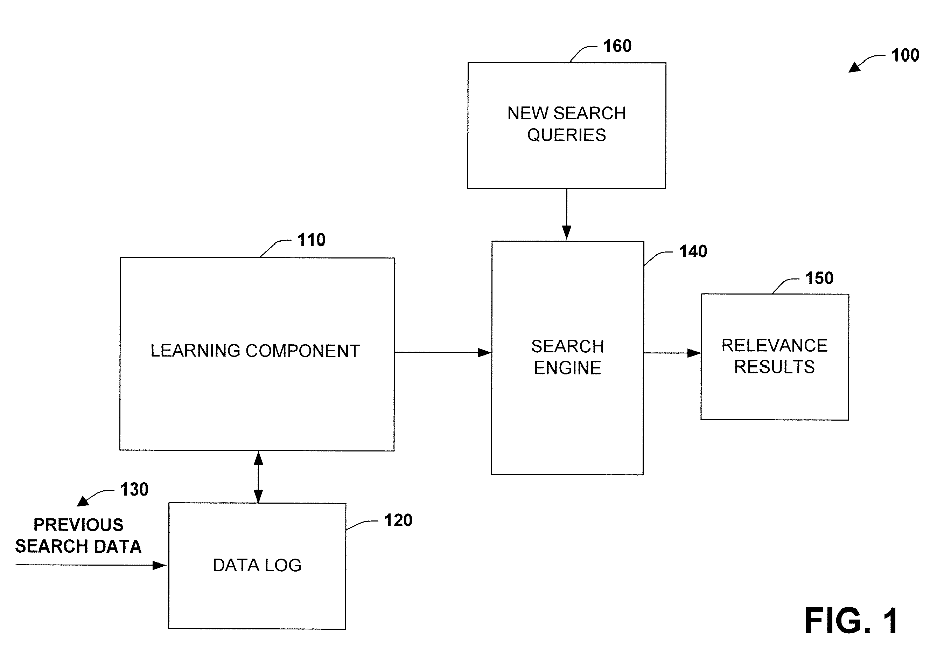

Referring initially to Fig. 1, an automated information retrieval system 100 is illustrated in accordance with an aspect of the subject invention. The system 100 includes a learning component 110 that is trained from a data log 120. Data in the log 120 can be gathered from local or remote data sources and includes information relating to previous search data or activities 130 from a plurality of users. After training, the learning component 110 is employed with a search engine 140 to facilitate or enhance future search results which are indicated as relevance results 150. An early version of the search engine 140 can be the source of the data log 120. For instance, one or more new search queries 160 can be processed by the search engine 140. The queries 160 can be modified in accordance with the learning component 110 or results from the query can be filtered or determined as a subset based in part on training from the previous search data 130. In general, the system 100 employs various data mining techniques for improving search engine relevance. These include using relevance classifiers in the learning component 110, for example, to generate high quality training data for runtime classifiers that are employed with the search engine 140 to generate the relevance results 150. Sequential analysis can be utilized to map queries 160 and desired results of different queries within the same sessions that include using system 100 context features in runtime classifiers and query mapping for handling seasonal/time sensitive contents, as will be described in more detail below.

Classifiers (*e.*g., runtime classifiers) generated using machine learning techniques such as a Naive Bayesian model on end-user search data logs 120 can be employed together with an information retrieval (IR) component to form a highly relevant search engine. In one aspect, relevance data is determined from the log 120 by identifying user satisfied search results to train runtime classifiers. Currently, some systems process all clicks or selections on search results as satisfied by the user. Experiments show that about 1/3 of time when users selected a result they are actually satisfied with the selection. Therefore, training on "satisfied" clicks or selections will lead to optimized classifiers. To know whether a click is satisfied, users can be asked for their explicit feedback. However, in many situations, only a small percentage of users provide explicit feedback. To get feedback on all clicks, the system 100 can use clicks with explicit feedbacks to build another classifier that maps user behavior data (e.g., the time a user spent on a result, where they go from this result, some meta data on the result itself) to the explicit feedback. This classifier is referred to as a relevance classifier. Then, apply the relevance classifier on the clicks/results that users didn't provide explicit feedback to infer their satisfactions. This technique provides high quality data to train runtime classifiers.

During searches, when one query 160 does not provide satisfied results, a user may revise the query and resubmit it. They may repeat this process, until one satisfied result is returned. Various data mining techniques can be employed such as sequential analysis to analyze user search log data 120 and link failed queries (the queries that do not have satisfied results) to the satisfied results of their revised queries, and include these linked data into the training data for the runtime classifiers of the learning component 110. When the new runtime classifiers are deployed on a search server, for instance, users receive satisfied results 150 on the queries that were not satisfied with the conventional search engine that did not employ the classifiers or the earlier version of the search server (before deploying the new runtime classifiers).

Other considerations include training runtime classifiers using only terms in query strings. However, the classifier can be enhanced when including extra input variables such as operation system version, application used, hardware settings including whether a printer is linked or whether a digital camera is linked, for example. This extra information aids the runtime classifier to solve potential ambiguities thus providing improved result predictions. Still yet other predictions include providing query mapping for handling contextual data such as seasonal/time sensitive contexts, for example. During query processing stages, mapping seasonal/time sensitive queries to a version with time information using Lexical services in one instance. For example, when time is close to 2005, map "Calendar" to "Calendar Calendar-2005". This will improve the chance that Calendar 2005 appears on the top of a result list in the relevance results 150.

It is noted that various machine learning techniques or models can be applied by the learning component 110 to process the data log 120 over time. The learning models can include substantially any type of system such as statistical/mathematical models and processes for modeling users and determining results including the use of Bayesian learning, which can generate Bayesian dependency models, such as Bayesian networks, naive Bayesian classifiers, and/or other statistical classification methodology, including Support Vector Machines (SVMs), for example. Other types of models or systems can include neural networks and Hidden Markov Models, for example. Although elaborate reasoning models can be employed in accordance with the present invention, it is to be appreciated that other approaches can also utilized. For example, rather than a more thorough probabilistic approach, deterministic assumptions can also be employed (*e.g*., no dwelling for *X* amount of time of a particular web site may imply by rule that the result is not relevant). Thus, in addition to reasoning under uncertainty, logical decisions can also be made regarding the status, location, context, interests, focus, and so forth.

Learning models can be trained from a user event data store (not shown) that collects or aggregates contextual data from a plurality of different data sources. Such sources can include various data acquisition components that record or log user event data (*e.g*., cell phone, acoustical activity recorded by microphone, Global Positioning System (GPS), electronic calendar, vision monitoring equipment, desktop activity, web site interaction and so forth). It is noted that the system 100 can be implemented in substantially any manner that supports personalized query and results processing. For example, the system could be implemented as a server, a server farm, within client application(s), or more generalized to include a web service(s) or other automated application(s) that interact with search functions such as a user interface (not shown) for the search engine 140.

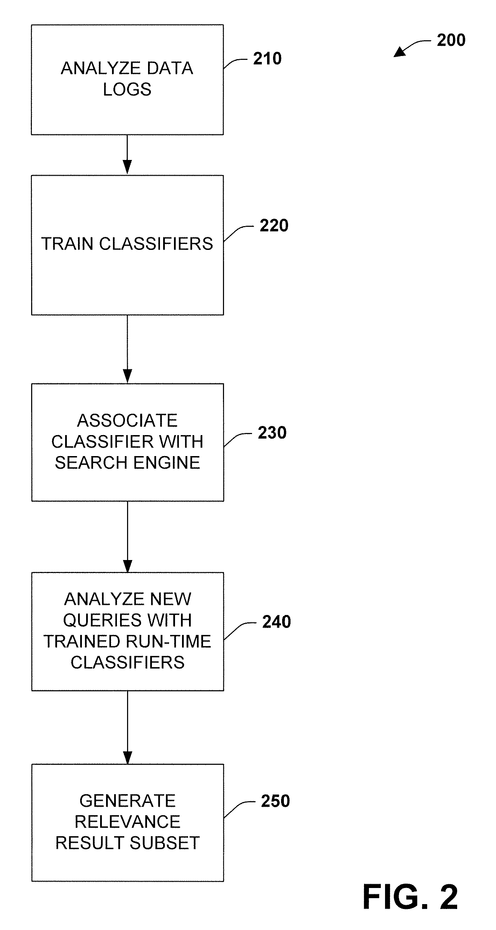

Fig. 2 illustrates an example information retrieval optimization process 200 in accordance with an aspect of the subject invention. While, for purposes of simplicity of explanation, the methodology is shown and described as a series or number of acts, it is to be understood and appreciated that the subject invention is not limited by the order of acts, as some acts may, in accordance with the subject invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the subject invention.

Proceeding to 210 of Fig. 2, one or more data logs are analyzed for past information retrieval activity data. This data can be analyzed from local data sources, remote data sources such as from an Internet site, or from combinations of sources. At 220, one or more classifiers are trained from the data logs. These classifiers can be trained over time while observing user (or system) responses or can be applied to data that has been accumulated or aggregated at some previous point. At 230, trained classifiers are associated with or integrated with one or more search engines or tools. These could include local desk-top search facilities (*e.g.*, help tool), remote search engines such as conventional web site engines, or be employed on an application-specific basis such as providing search capabilities within a given application.

At 240 new queries submitted by a user or system are analyzed by a search tool having a trained classifier operate therewith. This can include analyzing various contextual sources such as application data, hardware data, time data, seasonal data, calendar data, system data, file meta data, and so forth to further refine a respective query to produce relevance search results. At 250, search results subsets that have been determined from the trained classifiers and/or contextual data considerations are generated and provided to a user. This can include generating an output display via a user interface if desired. As can be appreciated, relevance results that have been generated in accordance with the present invention can be further analyzed (e.g., provide further training to a classifier) and thus, operate as nested opportunities for training or relevance refinement.

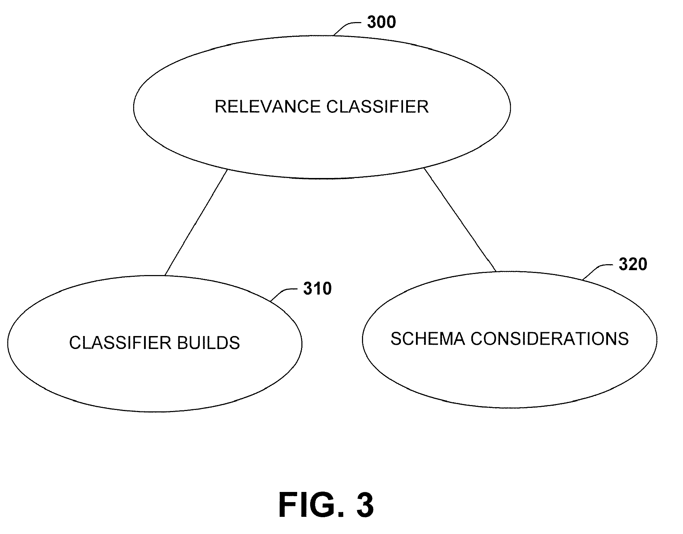

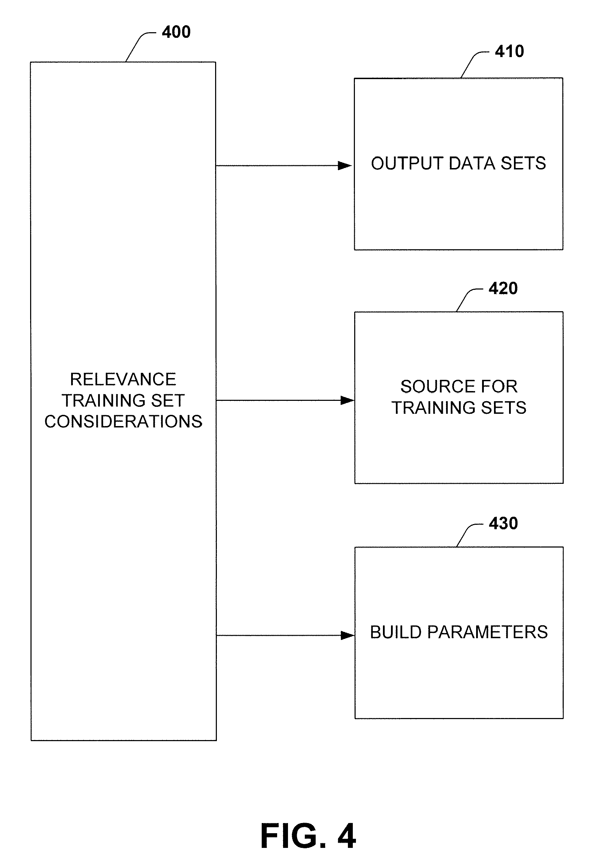

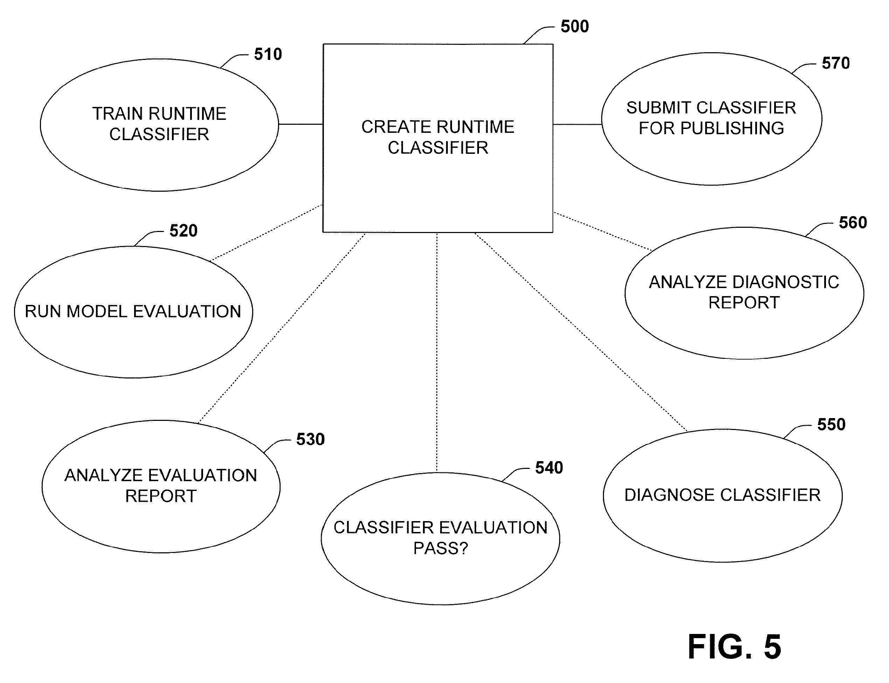

Figs. 3-8 relate to particular examples of building and training classifiers in accordance with the subject invention. Figs. 3 and 4 are associated with runtime classifier build and schema considerations whereas Figs. 5-8 relate to classifier modeling tools and considerations. It is to be appreciated however, that the subject invention is not limited to the particular examples shown and described and that other implementations are also possible.

Turning to Fig. 3, relevance classifier considerations 300 are illustrated in accordance with an aspect of the subject invention. Relevance Classifiers 300 can be used to predict users' satisfaction (*e.g*., explicit feedback) on a search asset by utilizing users' implicit feedback including users interaction with the system (*e.g.*, dwell time and exit type) and context setting information (*e.g.*, entry point, application, software settings, hardware settings). Some implicit feedback information is transformed into factors to facilitate the generation of relevance classifiers 300. For instance, the inputs to relevance classifiers are users' implicit feedback, and the output is users' satisfaction on the results (assets) they interacted with.

To train the relevance classifier 300, a set of data is employed with both implicit feedback and explicit feedback at result level (each entry in the data set represent a result of a search )(can link to multiple interactions to the result from a user in a single search session, or a visit to an asset from a user browsing). The classifier is then used to infer the explicit feedback of a user on a result using implicit feedback when the explicit feedback on the result is not available, for example. In one case, decision tree learning can be employed for the relevance classifiers 300 but other types of learning are also possible.

At 310, components for building and using the relevance classifier 300 is described as follows:
1. Employ an application to create result signature data files for training and testing relevance classifiers.
2. Train and test a relevance classifier using a decision tree learning tool on a training set and test set.
3. If test results are satisfied, load a decision tree classifier into the system where it is used to infer user satisfactions on search results. The decision tree classifier can be saved in a file or a data base.
4. If the test results are not satisfied, investigate problems that cased this (reasons include but not limited to training set/test set sizes are too small; the target distribution is skewed; may need to define new relevance factors) repeat process after problem investigation if desired.

At 320, schema considerations for processing relevance classifiers are shown in the case of saving relevance classifiers in a data base. For example, generated relevance classifiers 300 can be loaded into a table in a database and subscribe to the following schema attributes such as: a ClassifierlD (unique id), a GUID, a Classifier Name, a Description, a Status (active or inactive), a Scope (e.g., software version), other Version information, a Training Set Size, and Classifier (XML string). Another table can include User Relevance Factor storing the factors used by classifiers including UsedRelevanceFactorID (unique id), ClassifierID, and FactorTypeID.

Fig. 4 illustrates relevance training set considerations 400 in accordance with an aspect of the subject invention. To facilitate the generation of relevance classifiers, a tool can be provided to create a training set or test set from the data logs described above. At 410, output data can be generated as two data files and a meta data file. For example, each data file includes one row for each result (or asset interaction), and one column for each factor and explicit feedback. Factor values can be delimited by "," or other symbol. The meta data file generally includes information on each factor and the explicit feedback with one for each row. At 420, the data source of the training set and the test set are from the data log described above. The system can have built-in logic to decide which data item is for training and which is for test. At 430, classifier build parameters can be specified. These can include: Filenames specified by strings to generate the training/test sets and the meta data files; a Start Date to define the start point of the data; and End Date to define the end point of the data; a server name; and an Entry Point for which the datasets can be created.

Fig. 5 illustrates runtime classifier creation processing 500 in accordance with an aspect of the subject invention. In general, the following acts can be followed by authors when creating a runtime classifier at 500. Proceeding to 510, train a runtime classifier by providing information such as a Catalog name, a Date range, a Runtime classifier Name, a description (optional), target version, data sources including user annotated data, or author annotated data, or a combination of these two. The system returns a runtime classifier ID at the end of the process or an error message in the case of errors. At 520, run model evaluation (regression test) by providing the following information: a Runtime classifier ID; and a date range (the default value should be the one used when training the classifier). At 530, read and analyze the evaluation report to decide whether the classifier passed the evaluation.

At 540, if the runtime classifier did not pass the evaluation at 530, indicate this and proceed to 550 for diagnostics. Otherwise, indicate satisfaction with the runtime classifier (The system creates a final classifier for publishing at this time by combing the training set, regression set and the internal diagnostics set). If the evaluation did not pass at 540, proceed to 550 and diagnose the classifier by providing the following information, and then a diagnostics report will be created. The information includes a Runtime classifier ID (The same date range as for the training can be used here). At 560, read the diagnostics report and take actions to change the training data. Then, go back to 510 to recreate a new runtime classifier. Note that the training data should be changed at this point. At 570, the runtime classifier is ready for publishing to the search engine to deploy. It is noted that in 500, some acts can be automated. Runtime classifiers and their meta data can be saved in a data base shared by all the processes in 500.

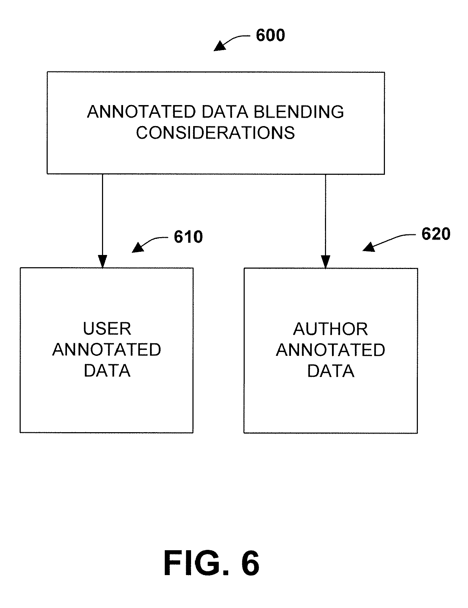

Fig. 6 illustrates classifier data blending considerations in accordance with an aspect of the subject invention. In this aspect, data annotations for the training of classifiers can be provided from at least two sources including user annotated data at 610 from data logs of search engine end users and author annotated data 620 from search authors. In general, these types of data can be blended in different combinations as follows:

Wᵤₛₑᵣ * User_annotated_data ∪ Wₐᵤₜₕₒᵣ * Author_annotated_data where, Wᵤₛₑᵣ is the weight given to each pair in the user annotated data 610, and Wₐᵤₜₕₒᵣ is the weight given to each pair in the author annotated data 620.

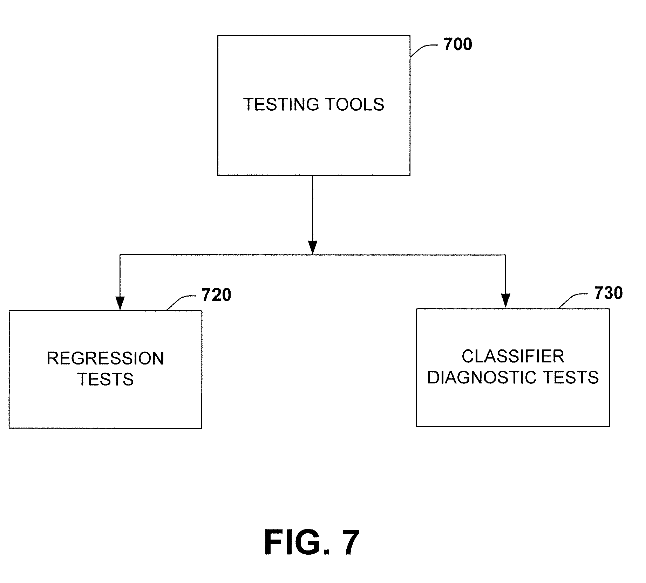

Fig. 7 illustrates classifier testing tools 700 in accordance with an aspect of the subject invention. In one aspect, the tool 700 extracts a runtime classifier from the data base based on a provided runtime classifier ID. The tool then runs through a test on a regression data set at 710 and generates a summary of the test results. The summary can include such aspects as: Top-1 to Top-10 accuracy; Average rank of top-10; Number of distinct raw queries in the test set; Number of distinct processed queries in the test set; Number of distinct assets in the test set; Number of distinct processed query-asset pairs in the test set; Total frequency in the test set and so forth. At 720, one or more diagnostic tests can be performed on the classifier. The tool 700 extracts a runtime classifier and related meta data based a specified runtime classifier ID. Then, the runtime classifier is evaluated on an internal diagnostics set, and generates several diagnostics. For example, these include total event frequency, number of distinct events, number of distinct feature vectors, number of assets, total feature count, average feature count for event, average recognized feature count, total query frequency, maximum, minimum, and average number of assets per feature vector, and so forth. Other diagnostics 720 include accuracy predictions, ranking statistics, asset level metrics, failed query metrics, classifier comparison metrics, prediction confusion metrics, and training and test set comparison metrics. As can be appreciated, other metrics or diagnostic indications can be provided.

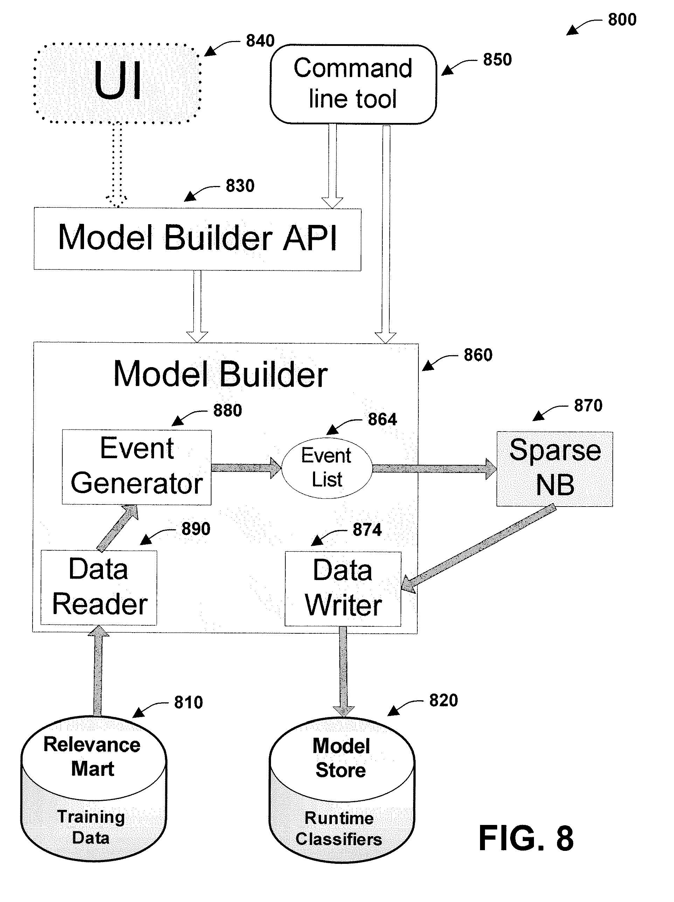

Fig. 8 illustrates an example classifier modeling system 800 in accordance with an aspect of the subject invention. In general, authors employ a tool or system 800 to build runtime classifiers from query and asset data that is in a database referred to as Relevance Mart at 810. The generated runtime classifiers are saved in another database referred to as Model Store 820. The logic of training/test data split is stored in the Relevance Mart 810. The runtime classifiers stored in the Model Store 820 can be evaluated through a Regression Test component (not shown), and are published afterward if the evaluation is passed.

The system 800 provides an Application Programming Interface (API) 830 for a user interface (UI) component 840 and a command tool 850 for building a runtime classifier using a specified training set and to save the generated model into the Model Store 820. The system 800 shows the control flow and data flow inside a Model Builder component 860 and its interaction with other components. The Model Builder 860 processes a set of parameters defining the source of training data, then decides where and how to extract the training data. For end user annotated queries from the Relevance Mart 810, its Data Reader extracts the raw data, and then Event Constructor converts the raw data into events in the format as follows that is requested by the NaiveBayes classifier trainer: Asset_ID; Frequency; and Features.

Typically, features include query string terms however other type of features can be added. An event list 864 is passed to a NaiveBayes classifier trainer 870 (SparseNB) to generate a runtime classifier. A Data Writer 874 stores the generated classifier model to the Model Store 820 together with meta data information. The API 830 includes the following parameters: Data source: 3 possible values: user annotated queries, author annotated queries, or both; Catalog: a catalog for training the classifier; a Date range: start date time and end date time for selecting training data; and a Minimum prediction confidence. An event generator 880 converts raw data from a data reader 890. This includes converting to lower case (some cultures only) and phrase matching at the client side, as well as word breaking, stemming, query expansion, statistical spell checking, and noise words at server side, for example.

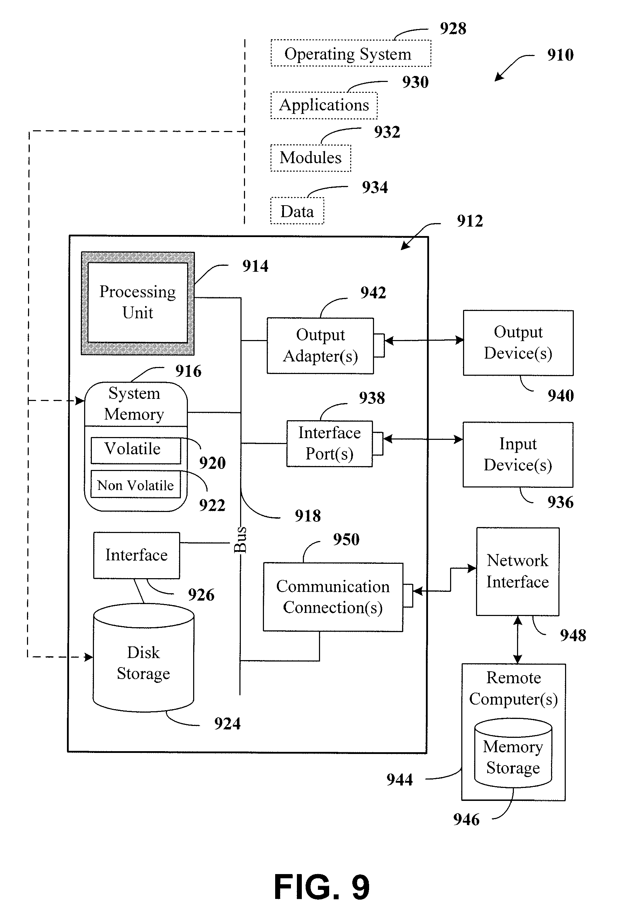

With reference to Fig. 9, an exemplary environment 910 for implementing various aspects of the invention includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable ROM (EEPROM), or flash memory. Volatile memory 920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 912 also includes removable/non-removable, volatile/non-volatile computer storage media. Fig. 9 illustrates, for example a disk storage 924. Disk storage 924 includes, but is not limited to, devices like a magnetic disk drive, floppy disk drive, tape drive, Jaz drive, Zip drive, LS-100 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used such as interface 926.

It is to be appreciated that Fig 9 describes software that acts as an intermediary between users and the basic computer resources described in suitable operating environment 910. Such software includes an operating system 928. Operating system 928, which can be stored on disk storage 924, acts to control and allocate resources of the computer system 912. System applications 930 take advantage of the management of resources by operating system 928 through program modules 932 and program data 934 stored either in system memory 916 or on disk storage 924. It is to be appreciated that the subject invention can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 via interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912, and to output information from computer 912 to an output device 940. Output adapter 942 is provided to illustrate that there are some output devices 940 like monitors, speakers, and printers, among other output devices 940, that require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

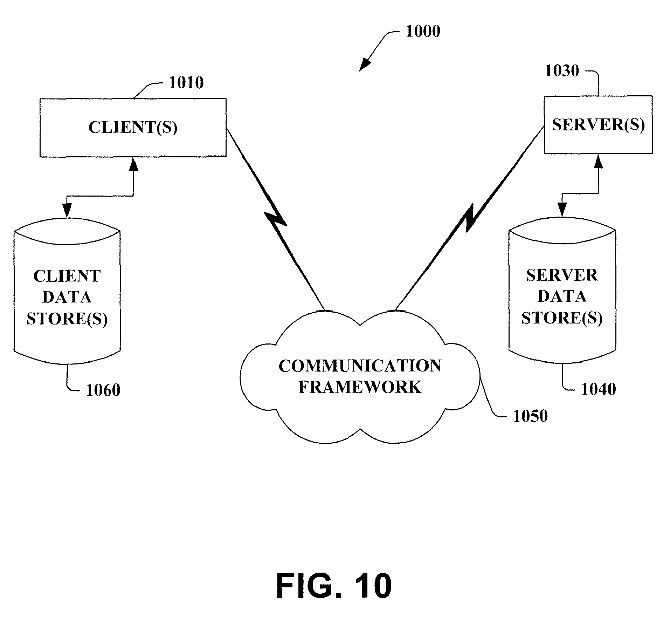

Fig. 10 is a schematic block diagram of a sample-computing environment 1000 with which the subject invention can interact. The system 1000 includes one or more client(s) 1010. The client(s) 1010 can be hardware and/or software *(e.g.,* threads, processes, computing devices). The system 1000 also includes one or more server(s) 1030. The server(s) 1030 can also be hardware and/or software *(e.g.,* threads, processes, computing devices). The servers 1030 can house threads to perform transformations by employing the subject invention, for example. One possible communication between a client 1010 and a server 1030 may be in the form of a data packet adapted to be transmitted between two or more computer processes. The system 1000 includes a communication framework 1050 that can be employed to facilitate communications between the client(s) 1010 and the server(s) 1030. The client(s) 1010 are operably connected to one or more client data store(s) 1060 that can be employed to store information local to the client(s) 1010. Similarly, the server(s) 1030 are operably connected to one or more server data store(s) 1040 that can be employed to store information local to the servers 1030.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. An automated information retrieval system, comprising:
a learning component that analyzes stored information retrieval data to determine relevance patterns from past information search activities; and
a search component that employs the learning component to determine a subset of current search results based at least in part on the relevance patterns.

2. The system of claim 1, the learning component employs at least one learning technique for generating runtime classifiers to be used inside the search component.

3. The system of claim 2, the learning technique is associated with naive Bayesian learning.

4. The system of claim 1, the search component is a search engine that is associated with at least one local or remote data source.

5. The system of claim 1, the stored information retrieval data is associated with explicit or implicit feedback.

6. The system of claim 5, the implicit feedback is associated with user selections, user dwell times, file manipulation operations, computer system information or contextual data.

7. The system of claim 6, the system information includes system version information, application information, hardware setting information, or system peripheral information.

8. The system of claim 6, the contextual information includes time, calendar, or seasonal information.

9. The system of claim 1, the learning component further employs a learning technique for generating relevance classifiers for identifying quality data for creating suitable runtime classifiers.

10. The system of claim 9, the learning technique for generating relevance classifiers is associated with decision tree learning.

11. The system of claim 1, the learning component employs a sequential analysis technique for mapping previously failed queries to desired results that are employed to create suitable runtime classifiers.

12. The system of claim 1, further comprising a schema that is employed to construct the learning component.

13. The system of claim 12, the schema includes a Classifier ID, a globally unique identifier (GUID), a classifier name, a description, a status, a scope, a version, a training set size, a classifier string, or a relevance factor.

14. The system of claim 1, further comprising a blending component to analyze data for a classifier from at least two sources.

15. The system of claim 14, the blending component processes user annotated data and author annotated data.

16. The system of claim 1, further comprising at least one of a user interface and an application programming interface to interact with the learning component or the search component.

17. An automated information retrieval method, comprising:
automatically analyzing past query data logs, the data logs include implicit and explicit user feedback;
constructing at least a first classifier from the data logs for inferring users' satisfaction of search results;
constructing at least a second classifier from the data logs and information generated from the first classifier for use inside a search engine;
automatically mapping failed queries to desired search results; and
automatically determining a subset of the search results in accordance with the classifier.

18. The method of claim 17, further comprising automatically employing system or contextual data to refine an automated information search.

19. The method of claim 17, further comprising automatically training the second classifier from data generated by the first classifier.

20. A system to facilitate computer retrieval operations, comprising:
means for logging user search data that includes implicit user activity patterns;
means for building a classifier from the search data;
means for inferring users' satisfaction of search results;
means for mapping previously failed queries to desired search results;
means for training the classifier; and
means for automatically determining a subset of search results from a current search request.
